# EUROPEAN PATENT APPLICATION

(11) **EP 2 689 647 A1**
(43) Date of publication of application: **29.01.2014**
(21) Application number: 12177915.1
(22) Date of filing: 25.07.2012
(51) Int. Cl.: A01B 35/22

(54) **Agricultural soil working device**

(71) Applicant: Eurozappa S.p.A., 40010 Sala Bolognese (BO) (IT)
(72) Inventor: Brighenti, Armando, 40010 Sala Bolognese (BO) (IT)
(74) Representative: Cicconetti, Andrea

(57) **Abstract**

A soil working device, that is associable with a movable agricultural machine, comprises:
- a working implement (2) provided with an operating portion (21) for interacting with the soil and with a connecting portion (22);
- a supporting element (3; 30) fixable to said movable agricultural machine and arranged for supporting said agricultural implement (2);
- a connecting element (4; 40) associated with one end (3a; 30a) of said supporting element (3; 30) and arranged for receiving, and coupling with, said connecting portion (22) of said agricultural working implement (2) in an assembled condition (M);
- a locking pin (5; 35; 45) that is slidably associated with a first seat (6) of said connecting element (4; 40) and is movable between a working position (A), wherein the locking pin (5; 35; 45) engages a second seat (7) of said working implement (2) such as to lock the latter to said connecting element (4; 40) in said assembled condition (M), and a disengaged position (B) wherein said locking pin (5; 35; 45) does not engage said second seat (7) to enable said working implement (2) to be disengaged from said connecting element (4; 40);
the first seat (6) and the second seat (7) comprise respective through openings and include respectively a first opening (11) and a second opening (12) having dimensions and a shape that are such as to enable opposite ends of the locking pin (5; 35; 45) to be reached and interacted with, in particular by a dismantling tool (50; 51), such as to move the locking pin (5; 35; 45) between the working position (A) and the disengaged position (B).

## Description

The present invention relates to agricultural implements, instruments and tools for working the soil. In particular, the invention refers to an agricultural working device comprising an implement for working the soil and a supporting element that is fixable to a movable agricultural vehicle, the supporting element and the implement being able to be connected and disconnected to and from one another.

In agriculture, the use of agricultural apparatuses called cultivators is known such as ploughs, tipped harrows, grubbers, scarifiers, subsoil ploughs, etc., that comprise a plurality of working implements or tools fixed to a supporting frame of the movable agricultural vehicle, for example a tractor, and arranged for working the soil and performing subsoil ploughing, ploughing, tillage, minimum tillage, etc. The supporting frame can be directly fixed to and supported on the tractor or be provided with wheels and dragged by the tractor.

The working implements, such as hoes, harrows, scarifiers, etc., can have different shapes and dimensions according to the tasks to be performed and are fixed to supporting elements having a generally elongated and/or curved shape, called spring tines, which are connected to the supporting frame. An agricultural apparatus or cultivator comprises a supporting frame provided with a plurality of spring tines arranged alongside or staggered, each provided with a working implement.

The working implements have to be dismantlable to be replaced by new implements when they are worn or damaged, or by different implements to enable the farmer to perform different tasks on different grounds.

For this purpose, the working implements are fixed in a reversible manner, by screws or bolts, to a connecting end of the supporting element. Nevertheless, due to encrustations, rust, dirt, soil, etc, which may block the bolts, the dismantling operation can be very difficult and long, especially when the cultivator comprises numerous spring tines and corresponding working implements. Further, the farmer has to have suitable means available for unscrewing and screwing the bolts. Lastly, the bolts, once they have been dismantled, can be easily lost.

In order to overcome these drawbacks, agricultural working devices have been developed comprising an adapter that is fixed by bolts to a free end of the supporting element and is configured for being engaged by a shank or stem of the agricultural working implement. The implement can be fitted onto the adapter and locked there in a working position. For this purpose, and in order to ensure that during the work the agricultural implement does not disengage from the adapter, suitable locking means is provided that mutually fastens the implement and the adapter.

The aforesaid devices enable the procedures for mounting/dismantling the implements to/from the spring tines to be simplified and accelerated but nevertheless have certain drawbacks. The locking means can, in fact, due to encrustations, rust, dirt, soil, etc, lock and prevent the implement from disengaging from the adapter. Similarly, the shank can remain wedged and fixed to the adapter.

One object of the present invention is to improve known agricultural working devices comprising an agricultural working implement and a supporting element that is fixable to a frame of an agricultural vehicle that are mutually couplable with one another in a reversible manner.

Another object is to make an agricultural working device that enables an agricultural working implement to be mounted on or dismantled from the corresponding supporting element, for example, a spring tines, easily and rapidly.

A further object is to make an agricultural working device that is associable with an agricultural apparatus or cultivator and that has a tough structure and simple and reliable operation.

Such objects and still others are achieved by an agricultural working device according to one or more of the claims set out below.

The invention can be better understood and implemented with reference to the attached drawings that illustrate some embodiments thereof by way of non-limiting example, in which:
- figure 1 is a fragmentary and partially sectioned plan view of the agricultural working device of the invention in an assembled condition;
- figure 2 is a cross section according to line II-II in figure 1;
- figure 3 is an enlarged detail of the section in figure 2;
- figure 4 is a section according to line IV-IV in figure 2 showing a locking pin of the device of the invention in a working position;
- figure 5 is a section like the one in figure 4 showing the locking pin of the device of the invention in a disengaged position;
- figure 6 is a bottom plan view of an agricultural working implement of the device in figure 1;
- figure 7 is a top plan view of the implement in figure 6;
- figure 8 is a section according to line VIII-VIII in figure 6;
- figure 9 is a partial top plan view of a supporting element and of a connecting element of the device in figure 1;
- figure 10 is a cross section according to line X-X in figure 9;
- figure 11 is a plan view of elastic means of the device in figure 1;
- figure 12 is a fragmentary and partially sectioned plan view of a version of the agricultural working device of the invention in a mounting configuration;
- figure 13 is a partial section according to line XII-XII of figure 12;
- figure 14 is a section according to line XIV-XIV in figure 13;
- figure 15 is an enlarged detail of the section in figure 13 showing a locking pin of the device interacting with a manoeuvring tool.

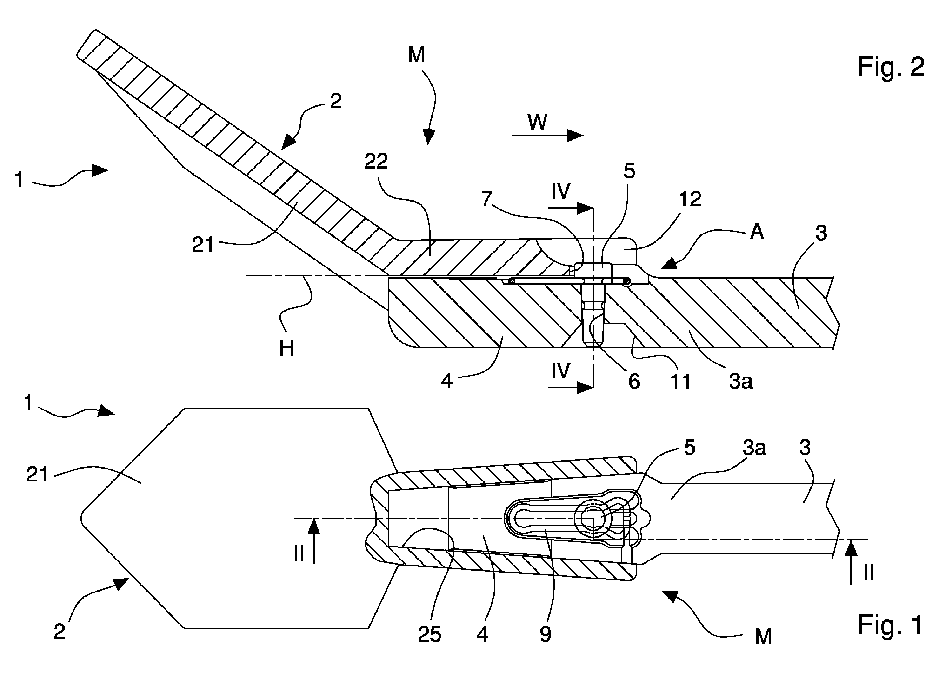

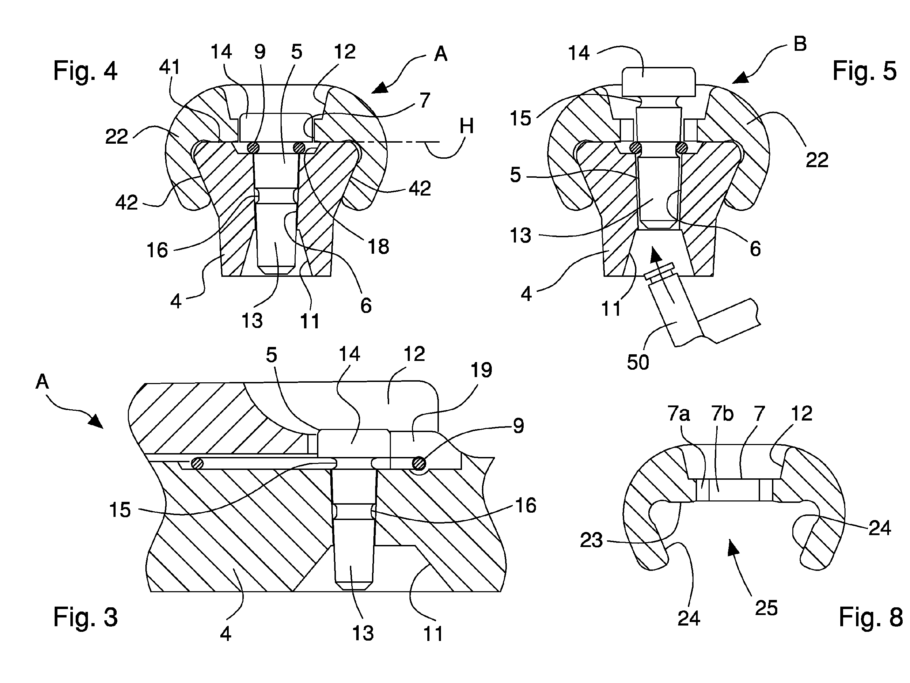

With reference to figures 1 to 5, an agricultural device 1 for working the soil is illustrated that is associable with a movable agricultural machine, which is not shown, and comprising a working implement 2 arranged for interacting with the soil and a supporting element 3 that can be fixed to the agricultural machine and supports the working implement 2. The latter comprises an operating portion 21 that is suitable for interacting with the soil and a connecting portion 22 for the removable connection with the supporting element 3.

The supporting element 3 comprises, for example, a spring tines of elongated shape, for example curved, that can be fixed to a movable frame that is dragged or directly connected to the agricultural machine, for example a tractor. The supporting element 3 can also comprise any other means that is suitable for connecting the working implement 2 to the agricultural machine in a stiff or elastic manner.

The working implement 2 can comprise a hoe, as illustrated in the figures by way of non-limiting example, or a harrow, a scarifier, or any agricultural implement that is suitable for working and interacting with the soil.

The device 1 further comprises a connecting element 4 associated with a first end 3a of the supporting element 3 and arranged for receiving, and coupling with, the connecting portion 22 of the working implement 2 in an assembled condition M.

In the embodiment illustrated in the figures, the connecting element 4 is made in a single body with the supporting element 3 and has an elongated shape and tapered cross section, i.e. it converges to the exterior. The connecting portion 22 of the working implement 2 comprises a housing 25 having a cross section that is also tapered and complementary to that of the connecting element 4. The connecting element 4 and the connecting portion 22 are in this manner progressively couplable along a coupling direction W to be stiffly shapingly coupled in the assembled condition M without clearance or with interference.

In the illustrated embodiment, the connecting element 4 has a substantially trapezoidal or dovetail section and in particular comprises a main abutting wall 41 and two lateral abutting walls 42 arranged for abutting respectively on a further main abutting wall 23 and two further lateral abutting walls 24 of the connecting portion 22. The lateral abutting walls 42, 24 are tilted and substantially specular to a centre plane, which is orthogonal to the main abutting wall 41, 23.

The main abutting walls 41, 23 come into contact slidably along a main sliding plane H.

A locking pin 5 is slidably associated with a first seat 6 of the connecting element 4 and is movable between a working position A and a disengaged position B. In the working position A the locking pin 5 engages a second seat 7 of the working implement 2 such as to lock the latter to the connecting element 4 in the assembled condition M. In the disengaged position B the locking pin 5 does not engage the second seat 7 so as to enable the working implement 2 to be disengaged from the connecting element 4 in a dismantled condition.

The locking pin 5 comprises a stem 13 that is suitable for slidably engaging the first seat 6 and a head 14 that is suitable for engaging the second seat 7 in the working position B. The locking pin 5 is transverse, in particular substantially orthogonal, to the main sliding plane H along which the working implement 2 is moved with respect to the connecting element 3 to be fitted in or removed from the latter.

The first seat 6 and the second seat 7 comprise respective through openings made respectively in the connecting element 4 and in the connecting portion 22 of the working implement 2. The first seat 6 and the second seat 7 include respectively a first opening 11 and a second opening 12, said openings 11, 12 having dimensions and a shape that are such as to enable, in particular by means of a dismantling tool 50, the opposite ends of the locking pin 5 to be reached and interact with, such as to move the aforesaid locking pin 5 between the working position A and the disengaged position B.

The dismantling tool 50 is, for example, a hammer or similar means with which the operator can selectively strike one or other of the ends of the locking pin 5, causing movement thereof along the first seat 6 in opposite directions, between the two positions.

The first seat 6 comprises a through hole, for example a cylindrical or conical through hole, arranged for slidably housing the stem 13 and is made on the main abutting wall 41. The first opening 11 is made on the side opposite the main abutting wall 41.

The second seat 7 comprises a through opening made on the connecting portion 22 of the working implement 2, and in particular on the further main abutting wall 23. The second seat 7 comprises a first portion 7a that is suitable for receiving and engaging the head 14 of the locking pin 5 in the working position A and a second portion 7b that enables the stem 13 to move to the disengaged position B to disengage the working implement 2 from the supporting element 3.

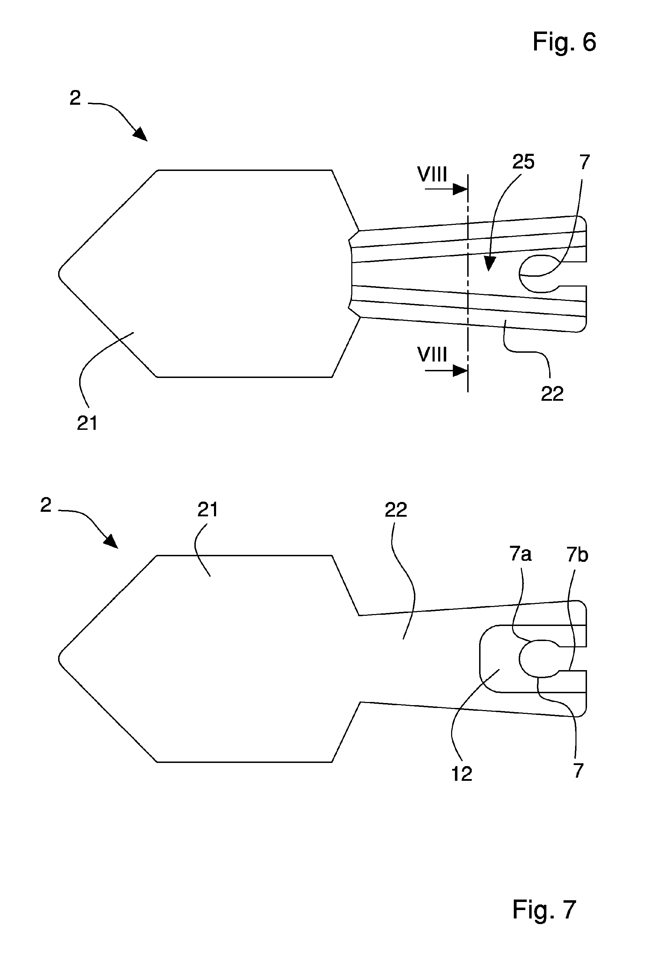

As illustrated in figures 6 and 7, the second seat 7 substantially comprises an open through slot, inside which the locking pin can be fitted when it is in the disengaged position B. In the working position A, the head 14 of the locking pin 5 is fitted in the first portion 7a, in this manner preventing the working implement 2 from moving along the coupling direction W, in particular from disengaging from the connecting element 4.

The connecting element 4 further comprises a protrusion 19 arranged for abutting on the head 14 of the locking pin 5 in the working position A. In particular, the protrusion 19 supports the head 14 of the pin 5 when the latter is further pushed by the working implement 2 in the coupling direction W.

The agricultural working device of the invention comprises fastening means 9 that is suitable for maintaining the locking pin 5 associated with the connecting element 4 both in the assembled condition M and in the dismantled condition, thus avoiding that it can become detached and get lost. The fastening means 9 is further arranged for stopping the locking pin 5 in the working position A or in the disengaged position B.

In the embodiment illustrated in figures 1 to 11, the fastening means comprises elastic means 9 associated with the connecting element 4 and arranged for engaging elastically and stopping the locking pin 5 in the working position A or in the disengaged position B in such a manner as to prevent disengaging thereof from the first seat 6 and the detachment from the connecting element 4.

The elastic means 9 comprises a spring element connected to the connecting element 4 and shaped in such a manner as to engage elastically a first groove 15 of the locking pin 5 in the working position A or a second groove 16 of the locking pin 5 in the disengaged position B. The first groove 15 and the second groove 16 are annular grooves made on the stem 13 of the locking pin 5.

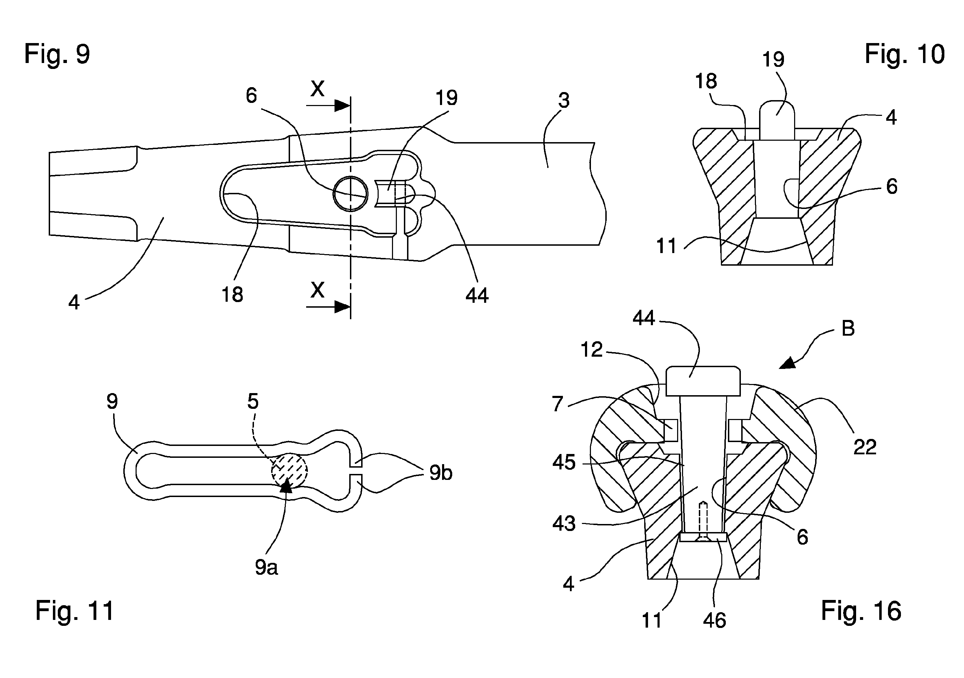

With particular reference to figure 11, the spring element 9 comprises a thread of elastic metallic material shaped in such a manner as to form an open elongated ring defining a central portion 9a arranged for abutting elastically on the grooves 15, 16 of the locking pin 5. The spring element 9 further comprises two free ends 9b that are opposite one another and are substantially aligned, arranged for being fitted in a through hole 44 made on the connecting element 4. The through hole 44 is made on the protrusion 19 and is transverse, in particular orthogonal, to the coupling direction W and parallel to the main sliding plane H. Once the two free ends 9b are fitted in the through hole 44, the spring element 9 is fastened to the connecting element 4. The latter further comprises a shaped recess 18 made at the first seat 6 and arranged for receiving and containing the elastic means 9 in such a manner as to enable the connecting portion 22 of the working implement 2 to be fitted. In particular, the recess 18 is made on the main abutting wall 41 of the connecting element 4.

The agricultural device 1 for working the soil of the invention provides a mounting procedure in which the working implement 2 is mounted by the operator on the supporting element 3. In particular, the connecting portion 22 of the working implement 2 is progressively fitted onto and coupled with the connecting element 4 of the supporting element 3. The operator pushes manually, possibly with the help of a tool, the working implement 2 along the coupling direction W until the stop thereof. The locking pin 5 maintained by the elastic means 11 in the disengaged position B enables this fitting as the stem 13 can slide inside the second seat 7 by passing through the second portion 7a of the latter.

When the connecting portion 22 is completely fitted into the connecting element 4, the locking pin 5 is moved by the operator to the working position A in which the head 14 of the aforesaid locking pin 5, engaging in the first portion 7a of the second seat 7, prevents corresponding movements between the working implement 2 and the supporting element 3. The locking pin 5 can be moved by the operator using a tool, typically a hammer that can strike the head 14 of the pin owing to the presence of the second opening 12.

The dismantling procedure provides initially for moving the locking pin 5 from the working position A to the disengaged position B. This movement can be performed by the operator using the hammer, which can strike the end of the stem 13 opposite the head 14 owing to the presence of the first opening 11.

Once the locking pin 5 is arranged in the disengaged position B the locking pin 5 does not engage the second seat 7 further and enables the working implement 2 to be detached from the connecting element 4 and thus from the supporting element 3. The detachment along the coupling direction W in the opposite direction can be performed with the help of the hammer.

It should be noted that the mounting and dismantling procedures are not hindered or made difficult by the presence of soil or dirt at the connecting portion 22 and at the connecting element 4. The locking pin 5 struck by the hammer can in fact move easily in both directions between the working position A and the disengaged position B also in presence of soil inside the seats 6, 7 and the openings 11, 12.

Similarly, by virtue of the sliding coupling, the working implement 2, with the help of the hammer, can be easily fitted to and removed from the connecting element 4. It should be noted that the open housing 25 of the working implement 2 prevents accumulations of soil remaining inside the latter, preventing the connection thereof.

Lastly, it should be noted that the elastic means 9 engaged with the locking pin 5 prevents the disengaging thereof from the first seat 6 and the detachment from the connecting element 4. In the disengaged position B, as the stem 13 is completely contained inside the first seat 6 it cannot be further pushed by strokes of the hammer outside the aforesaid seat 6. The locking pin 5 thus always remains associated with the connecting element 4 and cannot be lost. The wide availability of a hammer or similar implement ensures that the device of the invention can be used by the operator in any condition.

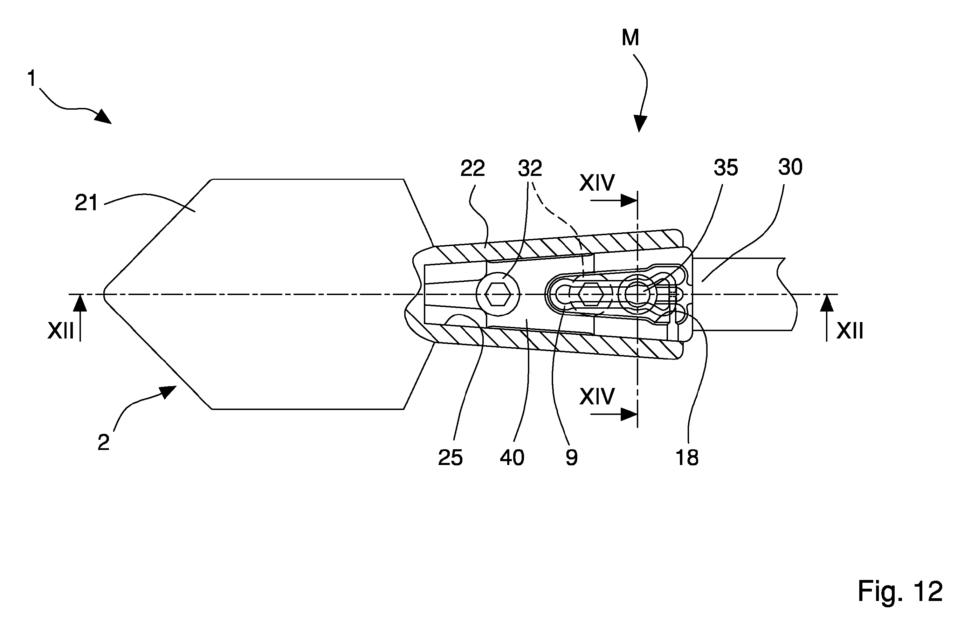

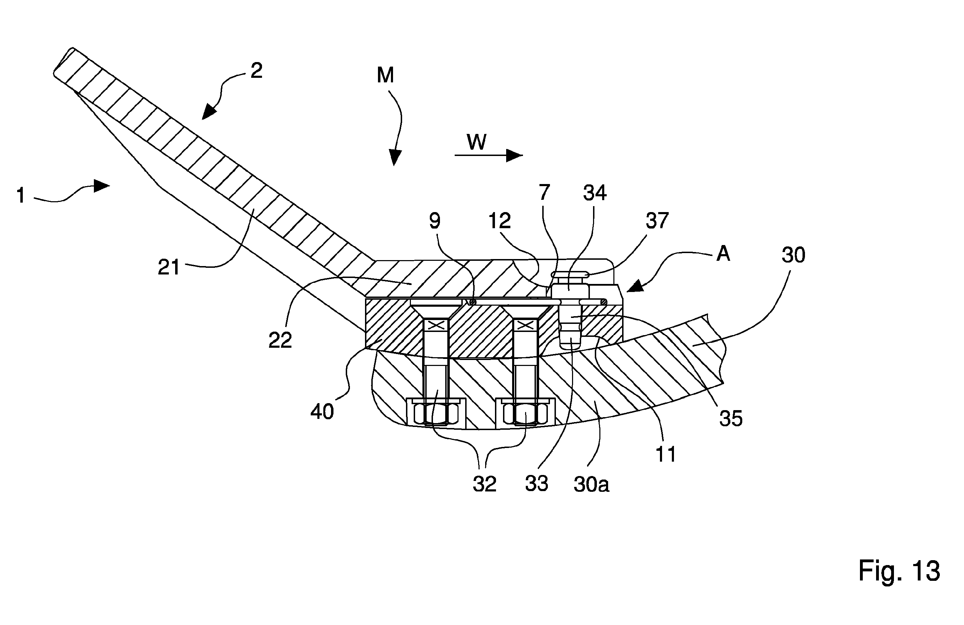

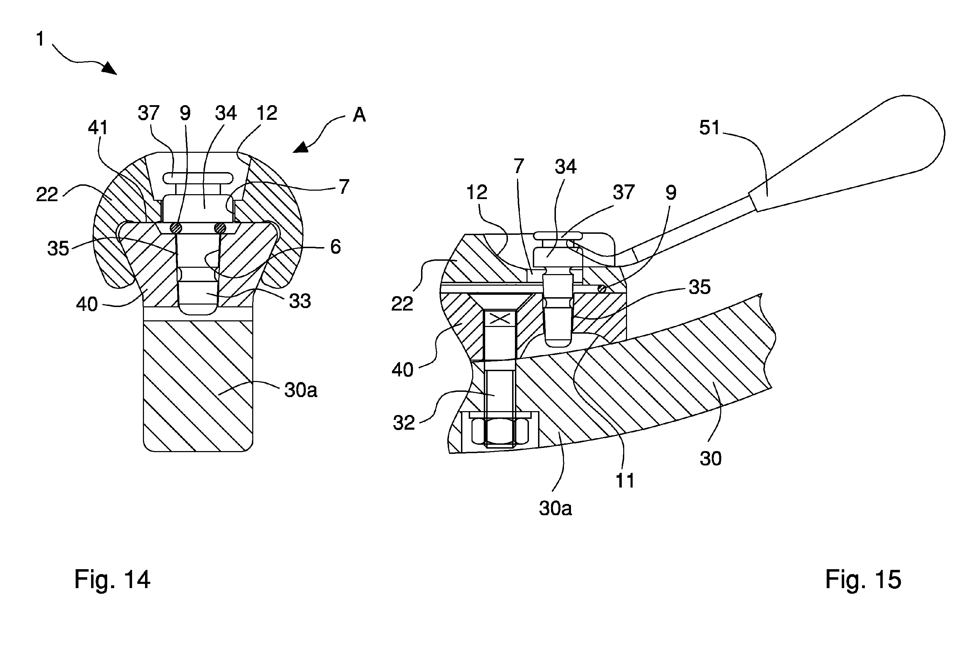

With reference to figures 12 to 15, an embodiment of the device 1 is illustrated that differs from the previously disclosed embodiment by the fact that the connecting element 40 is removably fixed to an end 30a of the supporting element 30 by fixing means 32. In particular, the connecting element 40 is connected by a pair of bolts 32 to the end 30a of the supporting element 3.

Also in this embodiment, the first seat 6 and the second seat 7 respectively comprise a first opening 11 and a second opening 12 that enable a dismantling tool to interact with the stem 33 and the head 34 of the locking pin 35 to move the latter from the working position A to the disengaged position B and vice versa.

In this embodiment of the device, the locking pin 35 comprises gripping means 37 fixed to the head 34 and arranged for engaging and interacting with a dismantling tool 51 provided with a shaped end.

The gripping means 37 comprises a ridge provided with a peripheral edge on which the dismantling tool 51 can engage so as to lift the aforesaid locking pin 35 and move the aforesaid locking pin 35 from the working position A to the disengaged position B.

Figure 16 illustrates another embodiment of the device 1 of the invention that differs from the embodiment disclosed above and illustrated in figures 1 to 5, because of the different fastening means. The fastening means comprises stopping means 46 associated with an end of the stem 43 of the locking pin 45 opposite the head 44 and arranged for preventing the locking pin 45 from exiting from the first seat 6 of the connecting element 4.

The stopping means comprises, for example, a washer 46 that is removably fixed to the end of the stem 43 by a screw.

In this embodiment, the locking pin 45 is further stiffly fitted with or without clearance or with interference inside the first seat 6, having, for example, a conical shape, so as to remain in the working position A during use of the device 1. Similarly, the washer 46 can abut, for example with interference, on a bottom portion of the first opening 11, next to the first seat 6, in such a manner as to stop the locking pin 45 in the disengaged position B.

In one alternative embodiment that is not illustrated, the stopping means may comprise a protruding edge that is made by plastic machining, for example heading, of the end of the stem 43 of the locking pin 45 opposite the head 44.

## Claims

1. Soil working device, associable with a movable agricultural machine and comprising:
- a working implement (2) provided with an operating portion (21) for interacting with the soil and provided with a connecting portion (22);
- a supporting element (3; 30) fixable to said movable agricultural machine and arranged for supporting said agricultural implement (2);
- a connecting element (4; 40) associated with one end (3a; 30a) of said supporting element (3; 30) and arranged for receiving, and coupling with, said connecting portion (22) of said agricultural working implement (2) in an assembled condition (M);
- a locking pin (5; 35; 45) that is slidably associated with a first seat (6) of said connecting element (4; 40) and is movable between a working position (A), wherein the locking pin (5; 35; 45) engages a second seat (7) of said working implement (2), such as to lock the latter to said connecting element (4; 40) in said assembled condition (M), and a disengaged position (B) wherein said locking pin (5; 35; 45) does not engage said second seat (7) to enable said working implement (2) to be disengaged from said connecting element (4; 40);
**characterised in that** said first seat (6) and said second seat (7) comprise respective through openings and include respectively a first opening (11) and a second opening (12) having dimensions and a shape that are such as to enable opposite ends of said locking pin (5; 35; 45) to be reached and interacted with, in particular by means of a dismantling tool (50; 51), such as to move said locking pin (5; 35; 45) between said working position (A) and said disengaged position (B).

2. Device according to claim 1, comprising fastening means (9; 46) for maintaining said locking pin (5; 35; 45) associated with said connecting element (4; 40) and for stopping said locking pin (5; 35; 45) in said working position (A) or in said disengaged position (B).

3. Device according to claim 2, wherein said fastening means comprises elastic means (9) associated with said connecting element (4; 40) and arranged for engaging elastically and stopping said locking pin (5; 35; 45) in said working position (A) or in said disengaged position (B) and preventing the disengaging thereof from said first seat (6) and the detachment from said connecting element (4, 40).

4. Device according to claim 3, wherein said elastic means (9) comprises a spring element connected to said connecting element (4; 40) and configured for elastically engaging a first groove (15) of said locking pin (5; 35) in said working position (A) or a second groove (16) of said locking pin (5; 35) in said disengaged position (B), said first groove (15) and said second groove (16) being made on a stem (13; 33) of said locking pin (5; 35).

5. Device according to claim 3 or 4, wherein said connecting element (4; 40) comprises a recess (18) made at said first seat (6) and arranged for containing said elastic means (9).

6. Device according to any preceding claim, wherein said connecting element (4) is made in a single body with said supporting element (3).

7. Device according to any one of claims 1 to 5, wherein said connecting element (40) is reversibly fixed by fixing means (32) to said first end (30a) of said supporting element (30).

8. Device according to any preceding claim, wherein said connecting element (4; 40) has an elongated shape and a tapered cross section and said connecting portion (22) of said working implement (2) comprises a housing (25) having a tapered cross section that is complementary to that of said connecting element (4; 40), said connecting element (4; 40) and said connecting portion (22) being progressively couplable along a coupling direction (W) to be shapingly coupled in said assembled condition (M).

9. Device according to any preceding claim, wherein said connecting element (4) comprises a main abutting wall (41) and two lateral abutting walls (42) arranged for abutting respectively on a further main abutting wall (23) and two further lateral abutting walls (24) of said connecting portion (22), said first seat (6) and said second seat (7) being made respectively on said main abutting wall (41) and on said further main abutting wall (23).

10. Device according to any preceding claim, wherein said locking pin (5; 35; 45) is transverse, in particular substantially orthogonal, to a main sliding plane (H) along which said working implement (2) is moved with respect to said connecting element (3) to be fitted in or removed from the latter.

11. Device according to any preceding claim, wherein said locking pin (5; 35; 45) comprises a stem (13; 33; 43) that is suitable for slidably engaging said first seat (6) and comprises a head (14; 34; 44) that is suitable for engaging said second seat (7), in said working position (B).

12. Device according to claim 11, wherein said first seat (6) comprises a through hole arranged for slidably housing said stem (13; 33; 43) and said second seat (7) comprises a shaped through opening provided with a first portion (7a) for receiving and engaging said head (14; 34, 44) in said working position (A) and a second portion (7b) that enables said stem (13; 33; 43) to move to said disengaged position (B) such as to enable said working implement (2) to be disengaged from said supporting element (3).

13. Device according to claim 11 or 12, wherein said connecting element (4; 40) comprises a protrusion (19) that is suitable for abutting on said head (14; 34; 44) of said locking pin (5; 35; 45) in said working position (A).

14. Device according to any one of claims 11 to 13, wherein said locking pin (35) comprises gripping means (37) fixed to said head (34) and arranged for engaging and interacting with said dismantling tool (51).

15. Device according to any one of claims 11 to 14, as claim 11 is appended to claim 2, wherein said fastening means comprises stopping means (46) associated with an end of said stem (43) opposite said head (44) and preventing the exiting of said locking pin (45) from said first seat (6) of the connecting element (4).
